Europäisches Patentamt

European Patent Office

Office européen des brevets

(19)

(11) Publication number: **0 124 489**
**B1**

(12) # EUROPEAN PATENT SPECIFICATION

(45) Date of publication of patent specification: **07.01.88**

(51) Int. Cl.⁴: **F 16 B 19/10**

(21) Application number: **84830061.2**

(22) Date of filing: **08.03.84**

(54) **Wall dowel.**

(30) Priority: **09.03.83 IT 2106483 u**

(43) Date of publication of application:
**07.11.84 Bulletin 84/45**

(45) Publication of the grant of the patent:
**07.01.88 Bulletin 88/01**

(84) Designated Contracting States:
**AT BE CH DE FR GB LI LU NL SE**

(56) References cited:
**EP-A-0 062 869**
**DE-A-2 524 459**
**DE-A-2 535 237**

**MACHINE DESIGN, vol. 37, no. 6, March 11, 1965, pages 87-89, Penton Publ., Cleveland, US, T.R. Freeman: "Blind rivets"**

**INDUSTRIAL FASTENERS HANDBOOK, first ed.; 1976, pages 398-400, Trade & Technical Press, Morden, GB; "Blind rivets"**

(73) Proprietor: **TAC RIVETING SYSTEM di Oggionni Pier Giorgio & C. s.a.s.**
**3, Via Thaon di Revel**
**Milano (IT)**

(72) Inventor: **Oggionni, Pier Giorgio**
**Via Thaon di Revel, 3**
**I-20159 - Milano (IT)**

(74) Representative: **Cicogna, Franco**
**Ufficio Internazionale Brevetti Dott.Prof. Franco Cicogna Via Visconti di Modrone, 14/A**
**I-20122 Milano (IT)**

Courier Press, Leamington Spa, England.

EP 0 124 489 B1

## Description

The present invention relates to a metal expanding insert, for anchoring articles to solid walls, that is walls devoid of any hollows resulting from possible wall gaps or hollow tiles.

There are known and presently used several expanding metal inserts which are more or less structure-wise simple, both from the making and practical use standpoint.

It should however be noted that an excessive simplicity does not mean a corresponding safety and, moreover, it, frequently, does not solve satisfactorily the anchoring problem, thereby further operative steps or additional elements are necessary for using the known expanding inserts in order to firmly anchor articles to a wall.

On the other hand, an excessively complex structure negatively affects the production cost of the insert as well as the marketing success thereof.

For example the DE—A—2524459 reference teaches an expanding rivet including a mandrel enclosed in a first sleeve, to be deformed, upon pulling by a riveting machine, against a further outer sleeve inserted in a blind hole formed in a solid wall, to lock the rivet assembly in said hole. This rivet, as it should be apparent, is rather expensive, since it comprises three main parts of rather complex construction.

Accordingly, the main object of the present invention is to provide such an expanding metal insert which does not require for installation any additional anchoring elements and which may be applied to a solid wall in a very simple way.

Another object of the invention is to provide such an insert which comprises only two component parts and is able of providing a firm gripping in a blind hole formed in a solid wall.

Another object of the invention is to provide such a metal insert which may be made with a simple construction and at reduced cost, while being effective to be applied by the known commercially available riveting machines.

According to one aspect of the present invention, the above objects, as well as yet other objects which will become more apparent thereinafter, are achieved by an expanding insert, for anchoring articles to solid walls according to the claim.

The above and other characteristics, of functional and constructional nature of the expanding metal insert according to the present invention, will become more apparent thereinafter, with reference to the figures of the accompanying drawings, where:

Fig. 1 illustrates the step of drilling a hole in a wall by means of a drilling machine or the like;

Fig. 2 illustrates the step of inserting into the wall the insert according to the invention, by means of a riveting machine;

Fig. 3 illustrates the step of deforming the expanding portion of the insert, by pulling on its shank portion;

Figs. 4 and 5 illustrate the insert according to the invention, as inserted in the wall and provided, in addition to a flange-shaped enlarged outer ring, with an expanding portion thereto a threaded bracket may be associated for supporting cables and pipes;

Fig. 6 is a perspective view illustrating the improved metal insert according to the invention, before application;

Fig. 7 is a cross-sectional view illustrating a simplified embodiment of the insert according to the invention.

With reference to the above mentioned figures, the expanding metal insert according to the invention comprises an outer sleeve 1 including an expanding portion 10, an outer flange 2, a threaded portion 3 and a long cylindrical shank portion 4, slidingly housed in said sleeve 1, and provided with a head having a countersunk or flat underhead 5 and with a weakened portion 6.

More specifically, said shank 4 is housed within the sleeve 1 in such a way that the head 5 is located on the side of the expanding portion 10, whereas the weakened portion 6 is located inside the sleeve 1.

The sleeve 1 defines, in its inside, an axially extending hole including a first enlarged portion 11, having a diameter slightly less than the diameter of the head 5, and a second narrowed portion 12 which acts as a stop abutment for the translation of the shank 4 as the insert is applied to the wall.

According to the invention the diameter of the head 5 and that of the sleeve enlarged portion 11 are selected, as it should be apparent from the drawings, in such a way that, as the expanding insert is applied, the head 5 will enter, for a substantial length, the enlarged portion 11, thereby radially expanding it against the inner surface of the hole 9 formed in the wall, and providing a firm locking of the insert in said hole.

In particular, as it should be apparent, the penetration length of the head 5 into the enlarged portion 11, will depend on the portion of the manouvred portion 10.

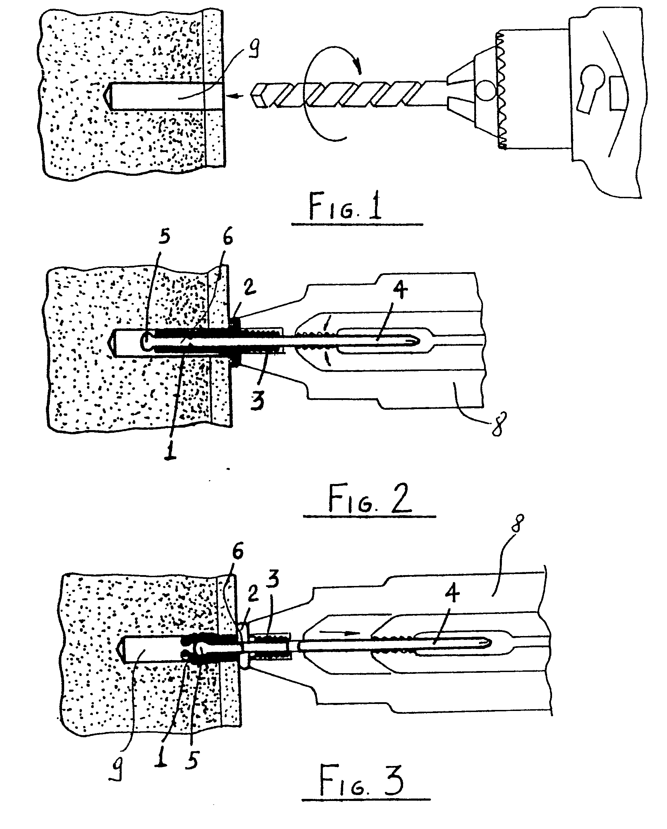

As it should be apparent, in the embodiment illustrated in Figs. 1 to 6, upon having inserted the insert into the hole 9 formed in the wall, as far as to cause the rear face of the outer flange 2 to abut thereagainst, by longitudinally pulling, by means of a riveting machine 8, on the shank 4, the head portion 5 will by penetrating into the enlarged portion 11 radially expand said enlarged portion 11 of the sleeve 1, in such a way as to radially press it against the inner surface of the hole.

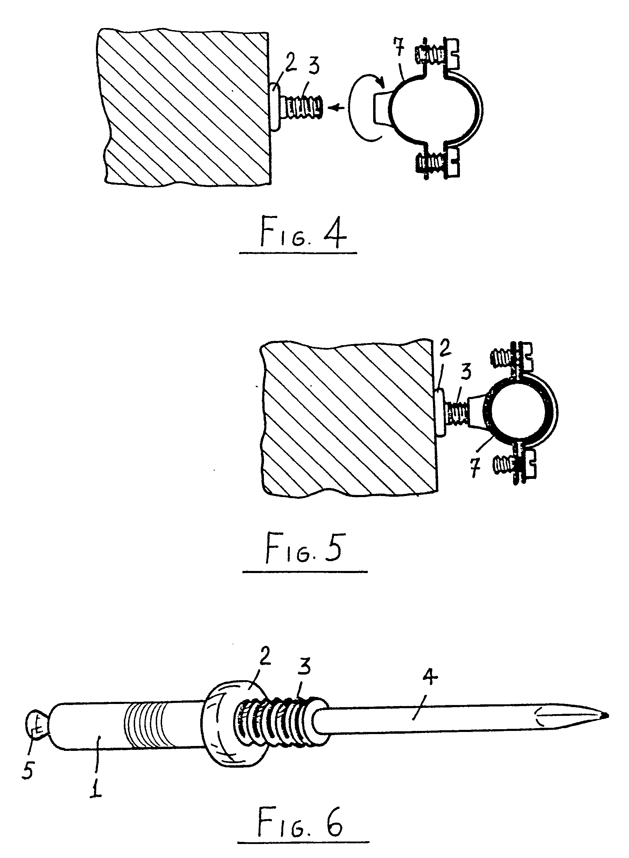

More specifically, the shank will be pulled in such a way as to cause it to break, at its weakened portion 6, that it at the head portion 5 arrives at the narrowed portion 12. In this condition, the threaded portion 3 of the sleeve 1 will project perpendicularly from the wall, the hole whereof will be suitably covered by the flange portion 2, and the mentioned threaded portion 3 will provide an affixing portion for the desired articles to be applied, such as, for example the bracket member 7 illustrated in Figs. 4 and 5.

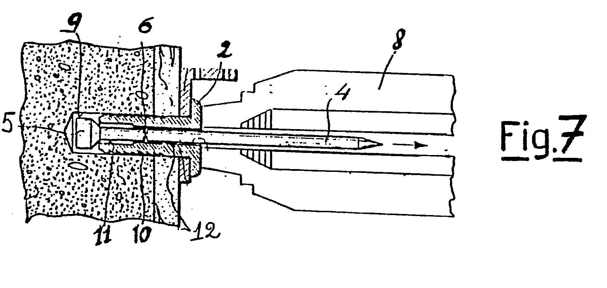

In particular, the insert illustrated in Fig. 7 may be applied in an analogous way to that of the above disclosed embodiment, with the single difference that the insert of Fig. 7, before insertion into the hole 9, is inserted into a hole formed in a bracket 14 or the like element, which is pressed against the wall through the flange 2.

From the Figures and the above disclosure the great advantages characterizing the expanding metal insert according to the invention will be self evident.

## Claim

An expanding insert, for anchoring articles to solid walls, comprising an outer sleeve (1) to be inserted into a hole (9) formed in a wall and provided with an expanding portion (10) and an outer flange (2), in said sleeve (1) there being slidingly housed a shank (4) provided, at said expanding portion, with a countersunk and enlarged head (5), and projecting from said outer flange for a length to be engaged by a riveting machine, said shank being provided, at a region inside said sleeve, with a weakened portion (6), said expanding portion of said outer sleeve being defined by the enlarged portion (11) of a hole formed in said sleeve and leading to a narrowed portion (12) of said sleeve effective to operate as an abutment member for said shank for breaking said shank at said weakened portion, characterized in that the diameter of said head (5) and that of said enlarged portion (11) as well as the location of said abutment member in said sleeve are selected in such a way that, as a pulling force is applied on said shank by said riveting machine, said head (5) will enter said enlarged portion (11) thereby expanding it radially against the inner surface of said hole (9) for a substantial part of the length of said portion, whereby in the radially expanded condition of said sleeve said head is completely enclosed by said sleeve.

## Patentanspruch

Aufspeizbare Einlage zum Verankern von Gegenständen an massiven Wänden, mit einer äußeren Buchse (1), welche zur Einfügung in ein in einer Wand ausgeführtes Loch (9) geeignet ist und mit einem aufspreizbaren Teil (10) und einem äußeren Flansch (2) versehen ist, wobei in der Buchse (1) ein Schaft (4) verschiebbar angeordnet ist, welcher bei dem aufspreizbaren Teil mit einer Einfräsung und einem erweiterten Kopf (5) versehen ist und aus dem äußeren Flansch um eine solche Länge vorsteht, daß er durch eine Nietmaschine greifbar ist, wobei der Schaft an einem im Inneren der Buchse angeordneten Bereich mit einem abgeschwächten Abschnitt (6) versehen ist, der aufspreizbare Teil der äußeren Buchse durch den erweiterten Bereich (11) eines Loches gebildet ist, welches in dieser Buchse ausgeführt ist und zu einem verengten Abschnitt (12) der Buchse führt, welcher zur Wirkung als Anschlagelement für den Schaft zum Brechen des Schaftes an dem abgeschwächten Abschnitt geeignet ist, dadurch gekennzeichnet, daß der Durchmesser des Kopfes (5) und der des erweiterten Bereiches (11) sowie die Lage des Anschlagelementes in der Buchse derart gewählt sind, daß, wenn eine Zugkraft durch die Nietmaschine auf den Schaft aufgebracht wird, der Kopf (5) in den erweiterten Bereich (11) eintritt und somit diesen radial gegen die innere Oberfläche des Loches (9) um einen wesentlichen Teil der Länge dieses Bereiches aufspreizt, so daß in dem radial ausgedehnten Zustand der Buchse der Kopf von dieser Buchse vollständig umgeben ist.

## Revendication

Cheville d'expansion pour ancrer des éléments à des parois solides, comprenant un manchon extérieur prévu pour être inséré dans un trou (9) formé dans une paroi et ayant une portion d'expansion (10) et un flasque extérieur (2), dans ledit manchon (1) on ayant logé de manière à pouvoir glisser une tige (4) pourvue, en correspondance de ladite portion d'expansion, d'un trou borgne et d'une tête élargie (5), et depassant dudit flasque selon une longueur donnée pour l'engagement par un appareil à riveter, ladite tige étant pourvue, en correspondance d'une zone à l'intérieur dudit manchon, d'une portion affaiblie (6), ladite portion d'expansion dudit manchon extérieur étant définie par la portion élargie (11) d'un trou formé dans ledit manchon et conduisant à une portion rétrecie (12) dudit manchon, apte à fonctionner comme un élément de butée pour ladite tige pour la rupture de ladite tige en correspondance de ladite portion affaiblie, caractérisée en ce que le diamètre de ladite tête (5) et celui de ladite portion élargie (11) et la position dudit élément de butée dans ledit manchon sont selectionnées de telle manière que, lorsqu'une force de traction est appliquée sur ladite tige par ledit appareil à riveter, ladite tête (5) s'insérera dans ladite portion élargie (11) de manière à élargir cette portion contre la surface intérieure dudit hole (9) pour une partie importante de la longueur de ladite portion, de manière que, dans la condition élargie radialement dudit manchon, ladite tête est complètement encompassée par ledit manchon.

0 124 489

F<sub>IG</sub>. 1

F<sub>IG</sub>. 2

F<sub>IG</sub>. 3

1

FIG. 4

FIG. 5

FIG. 6

Fig.7